# EUROPÄISCHE PATENTSCHRIFT

(11) **EP 4 182 739 B1**
(45) Veröffentlichungstag und Bekanntmachung des Hinweises auf die Patenterteilung: **24.04.2024**
(21) Anmeldenummer: 21731994.6
(22) Anmeldetag: 08.06.2021
(51) Int. Cl.: G02B 1/14, C03C 17/25, C23C 18/12

(54) **VERFAHREN ZUR AUFBRINGUNG EINES SCHUTZSCHICHTMATERIALS**
METHOD FOR APPLYING A PROTECTIVE COATING MATERIAL
PROCÉDÉ D'APPLICATION D'UN MATÉRIAU DE REVÊTEMENT PROTECTEUR

(30) Priorität: 15.07.2020 DE 102020118733
(43) Veröffentlichungstag der Anmeldung: 24.05.2023
(73) Patentinhaber: EV Group E. Thallner GmbH, 4782 St. Florian am Inn (AT)
(72) Erfinder: MITTENDORFER, Gerald, 4782 St. Florian am Inn (AT)
(74) Vertreter: Schneider, Sascha
(86) Internationale Anmeldenummer: PCT/EP2021/065302
(87) Internationale Veröffentlichungsnummer: WO 2022/012816

(56) Entgegenhaltungen:
- WO-A1-2014/007401
- KR-B1- 100 953 372
- US-A1- 2008 204 861
- US-A1- 2015 210 586

## Beschreibung

Der Erfindung betrifft ein Verfahren zur Aufbringung eines Schutzschichtmaterials.

US 2015210586 A1 offenbart eine Verglasung, die lichtdurchlässig sein kann, mit mindestens einem Muster, das transparent sein kann. US 2008204861 A1 offenbart reflektierende Spiegel mit mehreren Schichten, die die gewünschten optischen Eigenschaften und Beständigkeit gegen eine Verschlechterung der reflektierenden Oberfläche aufweisen. WO 2014007401 A1 offenbart eine Antireflexionsfolie mit einem hohen Antireflexionseffekt. KR 100 953 372 offenbart ein Verfahren zur Bildung einer Gasbarriere unter Verwendung eines Niedrigtemperatur-Härtungsprozesses. US4259285 offenbart Folien aus thermoplastischem Material, die auf beiden Seiten mittels eines Paares von Prägewalzen geprägt werden.

Die Industrie entwickelt immer kompliziertere optische Systeme, die dem Endbenutzer den Zugang zu einer neuen Art der Kommunikation gestatten sollen. Die neuesten optischen Systeme weisen immer noch Strukturen im Nano- und/oder Mikrometerbereich auf. Sie werden daher im weiteren Verlauf des Textes nur mehr als Strukturschichten bezeichnet. Die Strukturen sind aber in manchen Strukturschichten über einige Millimeter oder sogar Zentimeter verteilt und bilden daher, im Vergleich zur Strukturgröße, relativ große Flächen. Seit längerem besteht das Problem, dass derartige

Strukturschichten geschützt werden müssen.

Strukturschichten mit relativ kleinen makroskopischen Dimensionen werden vorzugsweise verkapselt oder beschichtet, um gegen die Umgebung geschützt zu sein. Die erwähnten, neuartigen, Strukturschichten werden allerdings auf relativ großen Flächen erzeugt. Sie werden in weiteren Prozessschritten entweder gar nicht oder relativ großflächig zertrennt. Je größer die Fläche, desto unwahrscheinlicher wird daher eine Verkapselung der Strukturschichten. Des Weiteren müssen die meisten, insbesondere großflächigen, Strukturschichten auf, im Allgemeinen beliebig geformte, Oberflächen aufgebracht oder auf selbigen sogar hergestellt werden. Die komplizierte Formung macht eine Verkapselung erst recht unmöglich. Die Verkapselungen sind daher für derartige, insbesondere großflächige, Strukturschichten zumindest von untergeordnetem Interesse. Des Weiteren benötigt man meistens mehrere Prozessschritte, um solche Verkapselungen durchzuführen.

Es werden daher im Stand der Technik vor allem Beschichtungsprozesse verwendet, um entsprechende Strukturschichten optimal schützen zu können.

Nicht alle Beschichtungsprozesse sind geeignet, um die genannten Strukturschichten zu beschichten, da das Strukturschichtmaterial durch die Beschichtung zerstört werden kann. Entweder die Beschichtung oder der folgende Aushärtungsprozess erfordert im Stand der Technik hohe Temperaturen. Des Weiteren möchte man eine Schutzschicht erzeugen, welche die optischen Eigenschaften der Strukturschicht nicht verändert oder sogar noch verbessert. Das schränkt die zur Verfügung stehenden Schutzschichtmaterialien für die Beschichtung weiter ein. Daher werden als Schutzschichtmaterialien eigentlich nur Oxide, insbesondere Siliziumoxide, in Betracht gezogen. Derartige Oxide werden entweder durch übliche Beschichtungsprozesse wie PVD (engl.: physical vapour deposition) oder CVD (engl.: chemical vapour deposition) bei relativ hohen Temperaturen abgeschieden, oder aber durch einen Sol-Gel Prozess bei nahe Raumtemperatur. Im letzteren Fall muss allerdings dennoch eine Umwandlung des Sol-Gels durch einen Härteprozess in die eigentliche Schutzschicht erfolgen. Dieser Härteprozess wird im Stand der Technik teilweise immer noch thermisch durchgeführt.

Das Schutzschichtmaterial kann bei niedrigen Temperaturen abgeschieden und vor allem bei niedrigen Temperaturen, insbesondere bei Raumtemperatur, gehärtet werden. Durch die niedrige Temperatur wird das Strukturschichtmaterial, insbesondere die in der Strukturschicht erzeugten Strukturen, nicht zerstört. Durch die Erzeugung einer Schutzschicht über der Strukturschicht wird die Strukturschicht gegen chemische, mechanische und thermische Einflüsse geschützt. Die Schutzschicht muss notwendigerweise aus einem, für den technisch relevanten Wellenlängenbereich, transparenten Schutzschichtmaterial erzeugt werden, damit die optischen Eigenschaften der Strukturschicht erhalten bleiben.

Die optische Industrie stellt seit einigen Jahren Strukturschichten mit Hilfe der Prägelithographie her. Dabei werden Weich- oder Hartstempel in ein Strukturschichtmaterial gedrückt, das in einem weiteren Prozessschritt ausgehärtet wird.

Die so erzeugte Strukturschicht ist unterschiedlichsten Widrigkeiten ausgesetzt. Dazu zählen chemische Beeinflussungen, insbesondere durch die umgebende Atmosphäre, mechanische Beeinflussungen etc. Derartige Strukturschichten wurden daher bis heute, sofern möglich, verkapselt. Die Verkapselung erlaubte eine möglichst optimale Abtrennung von der umgebenden Atmosphäre, von Schmutz, Flüssigkeiten und Gasen.

Eine weitere Möglichkeit des Schutzes einer Strukturschicht stellt die Erzeugung einer Schutzschicht dar. Der direkten Beschichtung von Strukturschichten durch ein Schutzschichtmaterial standen bis heute eine Vielzahl von Problemen gegenüber. Im Stand der Technik existieren unzählige Verfahren zur Erzeugung, daher Beschichtung und/oder Aushärtung der Schutzschichten, die allerdings bei relativ hohen Temperaturen durchgeführt werden müssen. Derartig hohe Temperaturen können eine, unter der Schutzschicht liegende, Strukturschicht allerdings zerstören, insbesondere wenn diese aus einem Strukturschichtmaterial mit einer relativ geringen Zersetzungstemperatur besteht.

Im Stand der Technik sind andere Verfahren, insbesondere Schleuderbelackungsverfahren, bekannt, die versuchen derartige Probleme umgehen. Mit Hilfe der Schleuderbelackungsverfahren werden Schutzschichtmaterialien, aus der Materialklasse der Sol-Gele, auf die Strukturschichten abgeschieden. In weiteren Prozessschritten müssen diese Strukturschichtmaterialien allerdings, insbesondere bei relativ hohen Temperaturen, ausgehärtet werden. Die folgenden Aushärtungsprozesse müssen, auch wenn die Beschichtung bei niedrigen Temperaturen durchgeführt wurde, daher immer noch bei relativ hohen Temperaturen erfolgen.

Aufgabe der vorliegenden Erfindung ist es daher, die Nachteile des Stands der Technik zu beseitigen und insbesondere ein verbessertes Verfahren zur Ausbildung einer Schutzschicht anzugeben.

Diese Aufgabe wird mit den Merkmalen des Patentanspruchs 1 gelöst. Vorteilhafte Weiterbildungen der Erfindung sind in den Unteransprüchen angegeben.

Gegenstand der Erfindung ist ein Verfahren zur Aufbringung eines Schutzschichtmaterials auf eine Strukturschicht zur Ausbildung einer Schutzschicht, vorzugsweise einer Oxidschicht, bevorzugter einer Siliziumdioxidschicht, auf der Strukturschicht, wobei die Aufbringung des Schutzschichtmaterials bei einer Temperatur kleiner als 200°C, vorzugsweise kleiner als 100°C am, noch bevorzugter kleiner als 75°C, am bevorzugtesten kleiner als 50°C am allerbevorzugtesten bei Raumtemperatur, erfolgt, wobei die Schutzschicht geprägt wird.

Bevorzugt ist vorgesehen, dass die Aufbringung des Schutzschichtmaterials mit einem Sol-Gel Verfahren erfolgt.

Bevorzugt ist weiterhin vorgesehen, dass das Schutzschichtmaterial nach der Aufbringung auf die Strukturschicht, vorzugsweise bei Raumtemperatur, mit einem Ammoniakgas zur Ausbildung der Schutzschicht ausgehärtet wird. Bevorzugt ist weiterhin vorgesehen, dass das, vorzugsweise flüssige, Schutzschichtmaterial in die Schutzschicht umgewandelt wird, wobei die

Schutzschicht glasartig ist.

Bevorzugt ist weiterhin vorgesehen, dass die Strukturschicht Strukturen aufweist, wobei die Strukturen als optische Systeme ausgebildet sind.

Die Erfindung betrifft somit ein Verfahren zum Schutz einer Strukturschicht durch eine Schutzschicht. Die Strukturschicht wird dabei mit einem Schutzschichtmaterial beschichtet. Vorzugsweise erfolgt die Aufbringung mit einem Sol-Gel Verfahren bzw. bei dem Beschichtungsverfahren handelt es sich vorzugsweise um ein Sol-Gel Verfahren.

Nach der Beschichtung der Strukturschicht mit dem Schutzschichtmaterial wird das Schutzschichtmaterial, bevorzugt bei möglichst niedrigen Temperaturen, weiter bevorzugt bei Raumtemperatur, mit einem Ammoniakgas zur Schutzschicht ausgehärtet.

Der Erfindung liegt dabei insbesondere der Gedanke zugrunde, dass das verwendete, vorzugsweise flüssige, Schutzschichtmaterial durch einen Prozess bei niedrigen Temperaturen, insbesondere bei Raumtemperatur, in eine glasartige Schutzschicht umwandelbar ist.

Die Grundidee der vorliegenden Erfindung ist es insbesondere, ein Schutzschichtmaterial, insbesondere ein Sol-Gel, bei geringen Temperaturen, insbesondere ohne Heizen, vorzugsweise bei Raumtemperatur und/oder im Bereich des Atmosphärendrucks, insbesondere ohne separate Druckbeaufschlagung, auf eine Strukturschicht aufzubringen, diese damit zu beschichten und danach auszuhärten.

Die Erfindung betrifft mit anderen Worten insbesondere ein Verfahren zur Herstellung einer, insbesondere als Schutzschicht ausgebildeten, nanokristallinen keramischen Beschichtung, insbesondere einer Oxidbeschichtung, ganz bevorzugt einer Siliziumdioxidbeschichtung, bei vergleichsweise niedrigen Temperaturen, insbesondere Raumtemperatur. Die Siliziumdioxidbeschichtung wird vorzugsweise nur zum Beschichten der Strukturschicht benutzt kann aber auch funktionale Merkmale aufweisen.

### Die Strukturschicht

Erfindungsgemäß werden unter den Strukturen der Strukturschicht insbesondere optische Systeme verstanden.

Die Erfindung handelt insbesondere von einer Methode, ein geprägtes, insbesondere bereits ausgehärtete, Strukturschichtmaterial bei niedrigen Temperaturen, vorzugsweise bei Raumtemperatur, mit einer, insbesondere als Schutzschicht ausgebildeten, keramischen Schicht, vorzugsweise Siliziumdioxid, zu beschichten. Mit besonderem Vorzug werden die Strukturschichtmaterialien, in welche optische Systeme geprägt wurden, für die optische Industrie mit der erfindungsgemäßen Ausführungsform beschichtet.

Als Strukturschichtmaterial für die zu erzeugende Strukturschicht wird ein Prägematerial, insbesondere ein Polymer, am bevorzugtesten ein Sol-Gel verwendet. Dieses wird vorzugsweise durch einen Abscheideprozess, insbesondere eine Sprühbelackung, noch bevorzugter eine Schleuderbelackung, auf einem Substrat abgeschieden und danach von einem Stempel geprägt und gehärtet. Als Strukturschichtmaterialien eignen sich insbesondere
o Polyethylen (PE)
o Polypropylen (PP)
o Cycloolefincopolymere (COC)
o Cycloolefinpolymer (COP)
o Polyvinylchlorid (PVC)
o Polyethylenterephthalat (PET)
o Polyamid (PA) oder Polysyrol (PS)
o Perfluoropolyether (PFPE)
o Polyhedrales oligomerisches Silsesquioxan (POSS)
o Polydimethylsiloxan (PDMS)
o Tetramethylorthosilicat (TMOS)
o Tetraethylorthosilicat (TEOS)
o Tetraisopropylorthosilicat (TPOS)
o Poly(organo)siloxane (Silikon)

Besonders bevorzugt wird ein Strukturschichtmaterial aus der WO2014202127A1 verwendet. In einer Erweiterung der Strukturschicht werden der Strukturschicht Nanopartikel hinzugemischt, welche die, insbesondere optischen und/oder mechanischen, Eigenschaften der Strukturschicht verändern.

### Die Schutzschicht

Die, insbesondere gemittelte, Schichtdicke der Schutzschicht, insbesondere Keramikschicht, am bevorzugtesten Siliziumoxidschicht, auf der Strukturschicht ist insbesondere kleiner als 1µm, vorzugsweise kleiner als 100nm, noch bevorzugter kleiner als 10nm, am bevorzugtesten kleiner als 1nm. In einer besonderen erfindungsgemäßen Ausführungsform wird die Dicke der Keramikschicht/Siliziumoxidschicht so gewählt, dass die Strukturen der Strukturschicht vollkommen in der Keramikschicht/Siliziumoxidschicht eingebettet und nicht nur mit dem Schutzschichtmaterial überzogen, sind. Die erfindungsgemäße Methode erlaubt die Beschichtung von praktisch beliebig geformten Strukturen bei niedrigen Temperaturen, insbesondere bei Raumtemperatur. Durch den erfindungsgemäßen Prozess können auch Keramiken, insbesondere Siliziumdioxid, auf den geprägten Strukturen abgeschieden werden. Dadurch eröffnet sich eine völlig neue Möglichkeit für die optische Industrie.

Als Schutzschichtmasse für die Schutzschicht wird insbesondere ein Polymer, am bevorzugtesten ein Sol-Gel verwendet. Dieses wird vorzugsweise durch Schleuderbelackung und/oder Sprühbelackung auf einem Substrat abgeschieden, optional von einem Stempel geprägt, und gehärtet. Als Schutzschichtmaterialien eignen sich insbesondere
o Polyethylen (PE)
o Polypropylen (PP)
o Cycloolefincopolymere (COC)
o Cycloolefinpolymer (COP)
o Polyvinylchlorid (PVC)
o Polyethylenterephthalat (PET)
o Polyamid (PA) oder Polysyrol (PS)
o Perfluoropolyether (PFPE)
o Polyhedrales oligomerisches Silsesquioxan (POSS)
o Polydimethylsiloxan (PDMS)
o Tetramethylorthosilicat (TMOS)
o Tetraethylorthosilicat (TEOS)
o Tetraisopropylorthosilicat (TPOS)
o Poly(organo)siloxane (Silikon)

Besonders bevorzugt wird ein Sol-Gel verwendet.

Erfindungsgemäß ist die Schutzschicht als Siliziumdioxidschicht ausgebildet. Erfindungsgemäß ist dabei insbesondere vorgesehen, dass eine von der Siliziumdioxidschicht geschützte Strukturschicht noch von elektromagnetischer Strahlung, ohne nennenswerte Verluste, erreicht werden kann. Ferner wurde erkannt, dass die optischen Eigenschaften der Strukturschicht nur minimal verändert werden, wenn die Strukturen vollständig in der Schutzschicht eingebettet und nicht nur von einem Schutzschichtfilm überzogen werden.

Bevorzugt handelt es sich bei der Schutzschicht um eine funktionale Beschichtung, die gegen den Durchtritt von Feuchtigkeit und/oder Gasen und oder mechanischer Beeinträchtigung schützt.

Erfindungsgemäß wird die Schutzschicht geprägt, um den Eintritt der elektromagnetischen Strahlen in die Schutzschicht und damit die Weiterleitung zur Strukturschicht zu beeinflussen, vorzugsweise zu verbessern.

In einer weiteren erfindungsgemäßen Ausführungsform können, insbesondere durch mehrere Prozessschritte, funktionale Einheiten in der Schutzschicht erzeugt werden.

Ein erfindungsgemäßer Aspekt besteht insbesondere in der Anwendung eines Niedertemperaturbeschichtungsprozesses zur Beschichtung der Strukturschicht, die aus dem Strukturschichtmaterial geprägt wurde.

Mit Hilfe der erfindungsgemäßen Methode könnten insbesondere folgende Strukturen, insbesondere optische Elemente, beschichtet werden:
- Linsen, insbesondere
   o Bikonvexlinsen
   o Plankonvexlinsen
   o Bikonkavlinsen
   o Plankonkavlinsen
   o Konvex-Konkavlinsen bzw. Konkav-Konvexlinsen
   o Fresnellinsen
- Spiegel
- Diffraktionselemente, insbesondere
   o Diffraktionsgitter, insbesondere
   ▪ Diffraktionsgitter, deren Diffraktionseigenschaften von ihrer Fläche bzw. ihren Flächenbereichen abhängen (engl.: chirped diffraction gratings).
   ▪ Holographische Diffraktionsgitter
   ▪ Échelle Diffraktionsgitter
   ▪ Nach physikalischen Merkmalen...
      - Transmission Diffraktionsgitter
      - Reflexions Diffraktionsgitter
      - Amplituden Diffraktionsgitter
      - Phasen Diffraktionsgitter
   ▪ Nach weiteren Eigenschaften...
   ▪ Nach dem Bereich
      - Oberflächendiffraktionsgitter
      - Volumendiffraktionsgitter
   ▪ Nach der Herstellungsart
      - Geritzte Diffraktionsgitter (engl.: ruled diffrcation gratings)
      - Drahtdiffraktionsgitter
      - Geprägte Diffraktionsgitter
      - Selbstassemblierte Diffraktionsgitter

In einer bevorzugten Ausführungsform werden vor allem Diffraktionsgitter beschichtet.

Insbesondere wird erfindungsgemäß ein Strukturschichtmaterial gewählt, das
a) einem Flammpunkt > 0°C und < 800°C und/oder
b) einem Brennpunkt > 20°C und < 850°C und/oder
c) einer Zündtemperatur > 100°C und < 700°C,
   vorzugsweise > 150°C und < 500°C
aufweist.

Die erfindungsgemäße Schutzschicht kann insbesondere im Hinblick auf eine Permeabilität oder Impermeabelität von Gasen optimiert werden. Dies wäre vor allem dann sinnvoll, wenn das Strukturschichtmaterial im Laufe der Zeit noch ausgasen kann und ein Aufquellen der abgeschiedenen Schutzschicht verhindert werden soll/muss.

Sofern die erfindungsgemäße Schutzschicht für die Permeabilität von Gasen optimiert werden sollen, wird die Schutzschicht derart erzeugt, dass sie eine offene Porosität aufweist. Die Porosität wird dabei über den Porositätsgrad definiert. Dieser ist erfindungsgemäß definiert als Verhältnis zwischen dem Porenvolumen zum Gesamtvolumen. Befinden sich keine Poren im Material, ist der Porositätsgrad entsprechend null. Der Porositätsgrad für erfindungsgemäße, permeable Keramikschichten ist insbesondere größer als 0.0001%, vorzugsweise größer als 0.01%, mit größerem Vorzug größer als 1%, mit größtem Vorzug größer als 5%, mit allergrößtem Vorzug größer als 10%, am bevorzugtesten größer als 25%. Hierdurch kann insbesondere festgelegt werden, wie viele Moleküle pro Zeiteinheit die Schutzschicht passieren können.

Da die Schutzschicht primär dem Schutz der Strukturschicht dienen soll, ohne die optischen Eigenschaften der darunterliegenden Strukturschicht zu verändern, sollte die Porengröße nicht im Größenordnungsbereich der elektromagnetischen Strahlung liegen, für welche die Strukturschicht konstruiert wurde. Für sichtbares Licht wäre das ein Wellenlängenbereich von ca. 200nm -700nm. Die Porengröße sollte daher deutlich unter 200nm, vorzugsweise unter 100nm, noch bevorzugter unter 50nm, am bevorzugtesten unter 25nm, am allerbevorzugtesten unter 10nm liegen. Insbesondere müssen die Poren aber immer groß genug bleiben, um einem entweichenden Gas den Durchtritt durch die Schutzschicht zu ermöglichen.

Für permeable Schutzschichten wird ein mittlerer Porendurchmesser bzw. eine mittlere Porengröße daher durch den erfindungsgemäßen Prozess insbesondere mindestens so groß gewählt wie der mittlere Durchmesser der Molekülsorte, welche die Schutzschicht passieren soll. Für permeable Schutzschichten ist der mittlere Porendurchmesser daher vorzugsweise größer als 1nm, mit Vorzug größer als 10nm, mit größerem Vorzug größer als 50nm, mit allergrößtem Vorzug größer als 100nm.

Unter dem mittleren Porendurchmesser wird der mittlere Durchmesser der Poren verstanden. Die Poren werden dabei vorzugsweise als radialsymmetrisch angenommen.

Beim Zusammenschluss mehrerer Poren entlang einer Strecke und der Ausbildung eines Porenschlauchs wäre dies entsprechend der mittlere Schlauchdurchmesser. Der mittlere Porendurchmesser stellt insbesondere einen oberen Grenzwert für die Molekülgröße der Moleküle dar, welche über die Poren aus der Schutzschicht ausdringen können sollen.

Sofern die erfindungsgemäßen Schutzschichten für die Impermeabelität von Gasen optimiert werden sollen, wird die Schutzschicht insbesondere derart aufgebracht, dass sie eine geschlossene, noch bevorzugter keine, Porosität aufweist. Der Porositätsgrad ist insbesondere kleiner als 25%, vorzugsweise kleiner als 10%, bevorzugter kleiner als 5%, noch bevorzugter kleiner als 1%, am bevorzugtesten kleiner als 0.01%, am allerbevorzugtesten kleiner als 0.0001%. Derartige impermeable Schutzschichten setzen voraus, dass die Strukturschicht nicht mehr ausgast. In diesem Fall sind aber kompakte Schutzschichten vorzuziehen, da sie dann die darunterliegende Strukturschicht auf alle Fälle vollständig von der umgebenden Atmosphäre abtrennen.

Für impermeable Schutzschichten ist der mittlere Porendurchmesser insbesondere kleiner als 100nm, mit Vorzug kleiner als 50nm, mit größerem Vorzug kleiner als 10nm, mit allergrößtem Vorzug kleiner als 1nm.

In einer ganz besonders bevorzugten erfindungsgemäßen Ausführungsform besteht die Herstellung der Schutzschicht aus einem mehrstufigen Prozess. In einem ersten Prozessschritt wird die Schutzschicht porös hergestellt, sodass ein Ausgasen der Strukturschicht noch für einen gewissen Zeitraum möglich ist. In einem zweiten Prozessschritt wird die Schutzschicht dann verschlossen, sodass die Anzahl der Poren und deren Größe minimal werden, vorzugsweise vollständig verschwinden.

In einer erfindungsgemäßen Ausführungsform wird der Niedertemperaturbeschichtungsprozess dazu verwendet, eine erste Seite eines ersten Substrats, welches optische Systeme aufweist, mit einer erfindungsgemäßen Keramikschicht, insbesondere Siliziumdioxidschicht, zu beschichten. Die Schichtdicke der Keramikschicht ist dabei insbesondere kleiner als 1µm, vorzugsweise kleiner als 100nm, noch bevorzugter kleiner als 10nm, am bevorzugtesten kleiner als 1nm und weist vorzugsweise eine der oben erwähnten Porositätseigenschaften auf. In einer besonders bevorzugten Ausführungsform werden die optischen Elemente vollständig eingebettet.

In einer anderen Ausführungsform wird der Niedertemperaturbeschichtungsprozess dazu verwendet, beide Seiten eines ersten Substrats mit einer erfindungsgemäßen Keramikschicht, insbesondere Siliziumdioxidschicht, zu beschichten. Die Dicke der ersten Keramikschicht auf der ersten Seite des Substrats ist insbesondere kleiner als 1µm, vorzugsweise kleiner als 100nm, noch bevorzugter kleiner als 10nm, am bevorzugtesten kleiner als 1nm und weist, insbesondere bezogen auf beide Keramikschichten gemeinsam, vorzugsweise eine der oben erwähnten Porositätseigenschaften auf. Insbesondere ist die Dicke zweiten Keramikschicht auf der zweiten Seite des Substrats gleich der Dicke der ersten Keramikschicht auf der ersten Seite des Substrats. Die Dicken der beiden Keramikschichten können aber auch unterschiedlich sein, um unterschiedliche Anforderungen an beiden Seiten berücksichtigen zu können. Ein derartiges Verfahren ist vor allem dann sinnvoll, wenn es sich um ein Substrat handelt, bei dem auf beiden Seiten optische Systeme geprägt wurden.

In einer Erweiterung der Schutzschicht werden der Schutzschicht Nanopartikel hinzugemischt, welche die, insbesondere optischen und/oder mechanischen, Eigenschaften der Strukturschicht verändern.

### Der Beschichtungsprozess

Bei den erfindungsgemäßen Ausführungsformen wird die Schutzschicht durch einen Niedertemperaturbeschichtungsprozess hergestellt, welcher eine Oxidation, eine thermische Zersetzung oder Pyrolyse der Strukturschicht verhindert. Ein besonders bevorzugter Prozess ist ein Niedertemperaturbeschichtungsprozess, bei dem eine Siliziumoxidschicht in einer Ammoniakatmosphäre aufgebracht wird.

In diesem Abschnitt wird das Schutzschichtmaterial daher für diese spezielle Ausführungsform als Siliziumprecursor (Siliziumpräkursor, also ein Silizium enthaltendes Molekül) bezeichnet.

In einem ersten Prozessschritt wird ein Siliziumprecursor mit einem Wassergehalt von weniger als 50 Vol-%, bevorzugter weniger als 25 Vol-%, noch bevorzugter weniger als 10 Vol-%, am bevorzugtesten weniger als 5 Vol-% durch die Vermischung eines Silikats, insbesondere eines oligomerische Organosilikats, noch bevorzugter einem Kieselsäuretetramethylester-Homopolymers, mit einem Lösungsmittel hergestellt. Das oligomerischen Organosilikat besteht typischerweise und insbesondere vorwiegend aus Kieslesäuretetramethlyester-Monomeren. Es kann durch beliebige andere Monomere ergänzt werden. Bei dem Lösungsmittel handelt es sich insbesondere um einen Alkohol, um Wasser oder ein Alkohol-Wasser-Gemisch. Der Siliziumprecursor besteht bevorzugt aus einem Mengenverhältnis von 0.01-1 Teil Wasser auf 0.02-100 Teile Alkohol, bezogen auf 1 Teil des zugrundeliegenden Polymers. Der pH-Wert des Precursors liegt zwischen 0 und 14, vorzugsweise zwischen 3 und 11, noch bevorzugter zwischen 5 und 9, am bevorzugtesten um die 7.

In einem zweiten Prozessschritt wird dieser Siliziumprecursor auf die Strukturschicht aufgebracht. Die Aufbringung erfolgt durch einen der folgenden Prozesse:
- Rotationsbeschichtung (spin-Prozess)
- Sprühbeschichtung
- Chemische Gasphasenabscheidung (CVD)
- Plasmaunterstützte Chemische Gasphasenabscheidung (PE-CVD)
- Physikalische Gasphasenabscheidung (PVD)
- Tauchbeschichtung
- Elektrochemische Beschichtung
- Stromlose Abscheidung
- Metallorganische Zersetzung
- Sol-Gel-Prozesse

Bevorzugt wird der Siliziumprecursor durch einen Sol-Gel-Prozess aufgebracht.

In einem dritten Prozessschritt wird der aufgetragene Silizium-Precursor in einer ammoniakhaltigen Atmosphäre gehärtet.

### Der Härteprozess

Nach der Beschichtung erfolgt eine Beaufschlagung der aufgebrachten Precursor-Schicht mit Ammoniak in einer Ammoniakatmosphäre. Die Ammoniakatmosphäre besteht insbesondere vorwiegend aus Wasser, Ammoniak und Alkohol. Die Atmosphäre zur erfindungsgemäßen Aushärtung wird insbesondere aus einem Flüssigkeitsgemisch von Alkohol und Ammoniaklösung erzeugt. Das Volumenverhältnis von Alkohol zu Ammoniaklösung liegt zwischen 0.01 und 100, vorzugsweise zwischen 0.1 und 10, am bevorzugtesten bei 1. Bevorzugt werden daher dieselben Mengen an Alkohol und Ammoniak verwendet. Beispielsweise werden bei 10 ml Alkohol bevorzugt 10 ml Ammoniaklösung verwendet, um die Atmosphäre herzustellen. Die Konzentration der Ammoniaklösung liegt zwischen 5% und 50%, vorzugsweise zwischen 10% und 40%, am bevorzugtesten zwischen 20% und 30%, am allerbevorzugtesten bei 25%. Das erzeugte Flüssigkeitsgemisch verdampft und sorgt damit für die den Siliziumprecursor aushärtende Ammoniakatmosphäre.

In einer bevorzugten erfindungsgemäßen Ausführungsform erfolgt die Einleitung von Ammoniakgas in die Arbeitskammer. Das Ammoniakgas wird dabei vorzugsweise mit einem Alkohol, insbesondere Methanol, vermischt. Des Weiteren erfolgt eine Addition eines Trägergases, insbesondere von Stickstoff, zum Transport des Alkohols und/oder des Ammoniaks. Durch die Einleitung eines Ammoniakgases kann auf Ammoniaklösungen als Flüssigkeit gänzlich verzichtet werden.

In beiden erfindungsgemäßen Ausführungsformen liegt der Druck während der Aushärtung des Siliziumprecursors in der Arbeitskammer zwischen 10⁻³ mbar und 10 bar, vorzugsweise zwischen 10⁻¹ mbar und 5 bar, noch bevorzugter zwischen 0.8 bar und 1.2 bar, am bevorzugtesten bei 1 bar.

Um einen hohen Produktdurchsatz bei der Herstellung der beschichteten Strukturschichten zu erzielen, hat es sich als vorteilhaft herausgestellt, die Aushärtung des Siliziumprecursors in einem Durchlaufaushärter durchzuführen. Dabei handelt es sich um eine Vorrichtung, welche von den Substraten, auf denen die Strukturschicht und der Siliziumprecursors hergestellt bzw. abgeschieden wurde, durchlaufen wird. Der Durchlaufaushärter besitzt einen Eingang, eine Aushärtungskammer, die mit dem erfindungsgemäßen Ammoniakgas gespült und, falls notwendig, entsprechend temperiert wird, sowie einen Ausgang. Vorzugsweise durchläuft ein Förderband den Durchlaufaushärter. Hierdurch werden eine durchlaufende Produktion und ein erhöhter Durchsatz ermöglicht.

Durch den erfindungsgemäßen Vorgang der Siliziumprecursorhärtung wird der Siliziumprecursor zur erfindungsgemäßen Schutzschicht ausgehärtet.

Ein wesentlicher erfindungsgemäßer Vorteil besteht darin, dass die Herstellung von Schutzschichten bei Raumtemperatur oder zumindest bei sehr geringen Temperaturen, insbesondere bei Temperaturen unterhalb des Flamm- und/oder Brenn- und/oder Zersetzungspunktes des Strukturschichtmaterials, möglich ist. Dadurch wird erst die erfindungsgemäße Beschichtung der

Strukturschicht mit der Schutzschicht ermöglicht.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
Figur 1a einen ersten Prozessschritt zur Herstellung einer Strukturschicht,
Figur 1b einen zweiten Prozessschritt zur Herstellung einer Strukturschicht,
Figur 1c einen dritten Prozessschritt zur Herstellung einer Strukturschicht,
Figur 1d einen vierten Prozessschritt zur Herstellung einer Strukturschicht,
Figur 2a einen ersten Prozessschritt zur Herstellung einer Schutzschicht,
Figur 2b einen zweiten Prozessschritt zur Herstellung einer Schutzschicht,
Figur 2c einen dritten, optionalen, Prozessschritt zur Herstellung einer Schutzschicht,
Figur 2d einen alternativen zweiten Prozessschritt zur Herstellung einer Schutzschicht,
Figur 2e einen alternativen dritten Prozessschritt zur Herstellung einer Schutzschicht,
Figur 2f einen vierten Prozessschritt zur Herstellung einer Schutzschicht,
Figur 3a einen ersten Prozessschritt zur Modifizierung einer Schutzschicht,
Figur 3b einen zweiten Prozessschritt zur Modifizierung einer Schutzschicht,
Figur 3c einen dritten Prozessschritt zur Modifizierung einer Schutzschicht,
Figur 3d einen vierten Prozessschritt zur Modifizierung einer Schutzschicht
und
Figur 4 ein Bauteil mit einer aufgebrachten Struktur- und Schutzschicht.

In den Figuren sind gleiche Bauteile oder Bauteile mit der gleichen Funktion mit den gleichen Bezugszeichen gekennzeichnet.

Insbesondere werden die Strukturen der geprägten Polymerschicht stark vergrößert und nicht maßstabsgetreu wiedergegeben, um die Darstellung zu erhöhen.

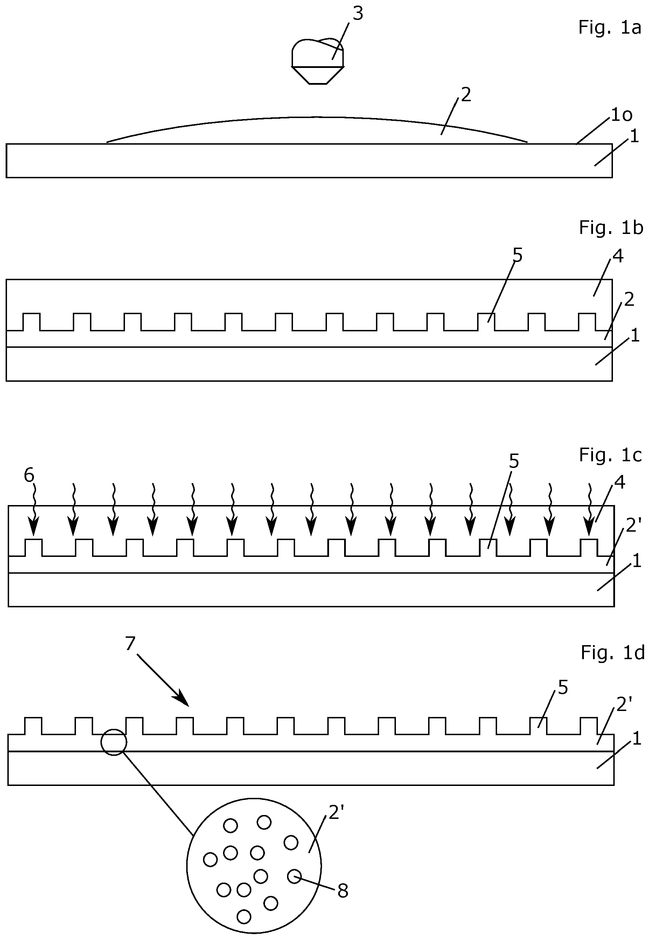

Die Figur 1a zeigt einen ersten Prozessschritt zur Herstellung einer Strukturschicht 7 (siehe Figur 1d) auf einem Substrat 1. Auf dem Substrat 1 wird ein Strukturschichtmaterial 2 mit einem Abscheidesystem 3 aufgebracht. Das Abscheidesystem 3 wird symbolisch durch eine Austrittsöffnung dargestellt. Bei dem Abscheidesystem 3 handelt es sich vorzugsweise um ein einfaches Schlauchsystem, über welches das Schutzschichtmaterial 2 auf dem Substrat 1 abgeschieden wird. Bei dem Abscheidesystem 3 kann es sich aber beispielsweise auch um ein CVD/PVD System handeln. Die Verteilung des Strukturschichtmaterials 2 wird in einem weiteren, nicht dargestellten, Prozessschritt beispielsweise durch die Drehung des Substrats 1 durchgeführt.

Die Figur 1b zeigt einen zweiten Prozessschritt zur Herstellung einer Strukturschicht 7 (siehe Figur 1d) auf einem Substrat 1. Mit Hilfe eines Stempels 4 erfolgt die Prägung und damit die Strukturierung des Strukturschichtmaterials 2. Durch die Prägung werden Strukturen 5 im Strukturschichtmaterial 2 erzeugt, die insbesondere optische Eigenschaften aufweisen sollen. Vorzugsweise handelt es sich dabei um Diffraktionsgitter.

Die Figur 1c zeigt einen dritten Prozessschritt zur Herstellung einer Strukturschicht 7 (siehe Figur 1d) auf einem Substrat 1. Der dritte Prozessschritt umfasst einen Aushärtungsprozess des Strukturschichtmaterials 2. Die Aushärtung erfolgt vorzugsweise durch eine Einwirkung 6. Bei der Einwirkung 6 handelt es sich vorzugsweise um elektromagnetische Strahlung, insbesondere UV Licht, oder um Wärme. Am bevorzugtesten erfolgt die Aushärtung, wie bildlich dargestellt, durch den Stempel 4 hindurch.

Die Figur 1d zeigt einen vierten Prozessschritt zur Herstellung einer Strukturschicht 7 auf einem Substrat 1. In diesem Prozessschritt erfolgt die Entformung des Stempels 4 vom ausgehärteten Strukturschichtmaterial 2`. Der Ausschnitt stellt einen vergrößerten Teil der Strukturschicht 7 dar, in dem Partikel 8 erkennbar sind. Die Partikel 8 können dem Strukturschichtmaterial 2, 2` beigemengt worden sein, um seine, insbesondere optische und/oder mechanischen, Eigenschaften zu verändern.

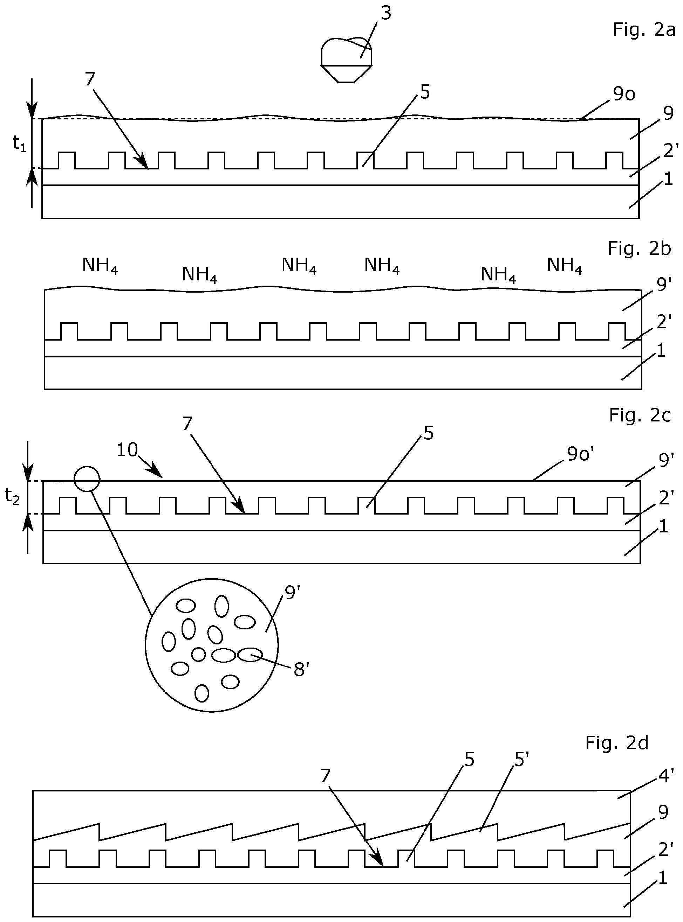

Die Figur 2a zeigt einen erfindungsgemäß ersten Prozessschritt der Abscheidung eines Schutzschichtmaterials 9 mit einer mittleren Dicke t1 auf der erzeugten Strukturschicht 7. Die Abscheidung erfolgt durch ein Abscheidungssystem 3. Bei dem Abscheidungssystem 3 handelt es sich vorzugsweise um dasselbe Abscheidungssystem 3, mit dem auch das Strukturschichtmaterial 2 abgeschieden wurde.

Die Figur 2b zeigt den erfindungsgemäß wichtigsten Schritt der Raumtemperaturhärtung des Schutzschichtmaterials 9 mit Hilfe einer ammoniakhaltigen Atmosphäre.

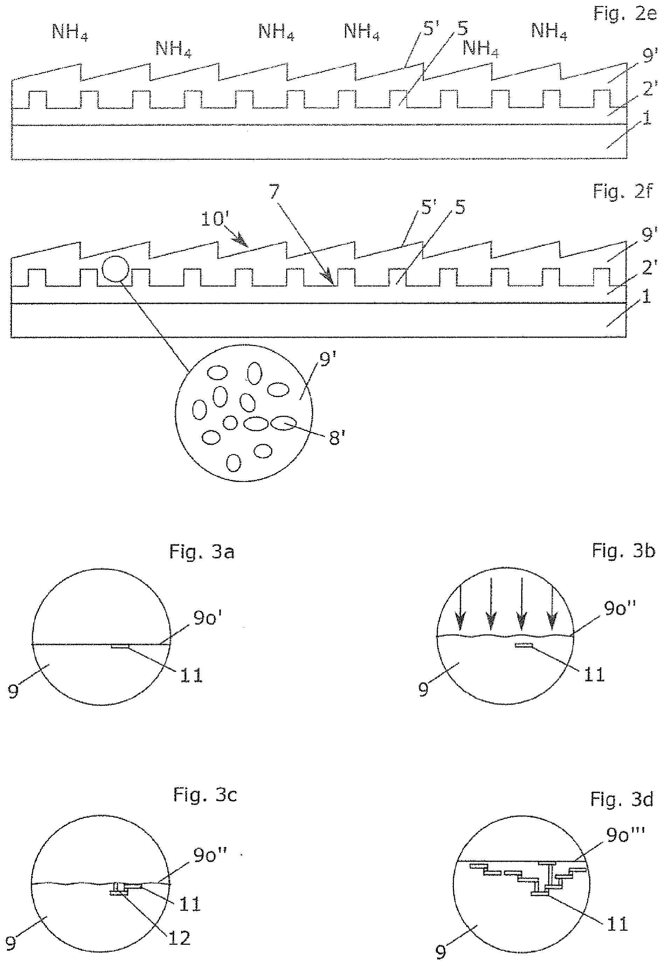

Die Figur 2c zeigt einen weiteren optionalen Prozessschritt zur Herstellung einer Schutzschicht 10 für eine Strukturschicht 7. Der Prozessschritt umfasst vor allem eine Planarisierung und/oder Abtragung des bereits ausgehärteten Schutzschichtmaterials 9` auf eine Schichtdicke t2. Ein derartiger Vorgang ist insbesondere notwendig, wenn man vorhat, die Schutzschichtoberfläche 9o' in weiteren Prozessschritten zu funktionalisieren (siehe Figuren 3a-3d). Der Ausschnitt stellt einen vergrößerten Teil der Schutzschicht 10 dar, in dem Partikel 8` erkennbar sind. Die Partikel 8` können dem Schutzschichtmaterial 9, 9` beigemengt worden sein, um seine, insbesondere optische und/oder mechanischen, Eigenschaften zu verändern. Die Verwendung unterschiedlicher Partikel 8, 8` in der Strukturschicht 7 und der Schutzschicht 10 sind vor allem dann unabdingbar, wenn das Strukturschichtmaterial 2' und das Schutzschichtmaterial 9` chemisch und physikalisch identisch sind. In den meisten Fällen wird das allerdings nicht der Fall sein. Um den Unterschied zwischen den Partikeln 8, 8` hervorzuheben, wurde teilweise eine elliptische Geometrie für die Partikel 8`gewählt.

Die Figur 2d zeigt einen alternativen zweiten Prozessschritt, der sich durch eine Prägung des Schutzschichtmaterials 9 durch einen Stempel 4` auszeichnet. Im Schutzschichtmaterial 9 werden Strukturen 5' erzeugt, die eine Auswirkung auf die optischen Eigenschaften der Strukturschicht 7 haben. Bei den Strukturen 5' kann es sich beispielsweise um ein Diffraktionsgitter handeln, welches Photonen mit einer gewissen Wellenlänge beugt oder um ein Transmissionsgitter um die Photonen gezielter auf die Strukturschicht 7 zu leiten. Im vorliegenden Beispiel handelt es sich bei den Strukturen 5' um Teile eines Echellediffraktionsgitters, wohingegen die Strukturen 5 Teile eines gewöhnlichen Diffraktiosgitters sind. Es handelt sich hier also nur um eine von vielen möglichen Ausführungsformen, welche als Beispiel dargestellt wird. Genauso gut könnten die Strukturen 5 als Echellediffraktionsgitter geformt worden sein.

Die Figur 2e zeigt den erfindungsgemäß wichtigsten Schritt der Raumtemperaturhärtung des geprägten Schutzschichtmaterials 9` mit Hilfe einer ammoniakhaltigen Atmosphäre. Dieser Prozessschritt ist im wesentlich identisch zu dem Prozessschritt aus der Figur 2b.

Die Figur 2f zeigt ein erfindungsgemäß alternatives Endprodukt mit einer strukturierten Strukturschicht 10`. Der Ausschnitt stellt einen vergrößerten Teil der Schutzschicht 10 dar, in dem Partikel 8` erkennbar sind. Die Partikel 8` können dem Schutzschichtmaterial 9, 9` beigemengt worden sein, um seine, insbesondere optische und/oder mechanischen, Eigenschaften zu verändern.

Die folgenden vier Figuren beschreiben einen Vorgang, der aufgrund der Komplexität wahrscheinlich schwer umzusetzen sein wird. Dennoch soll die entsprechende Möglichkeit hier offenbart werden.

Die Figur 3a zeigt einen ersten Prozessschritt einer möglichen Oberflächenmodifizierung der Schutzschichtoberfläche 9o'. Denkbar wäre die Herstellung einer funktionalen Einheit 11 in der Oberfläche (wiederum durch mehrere Prozessschritte, die hier nicht dargestellt werden). Dazu muss entweder das Schutzschichtmaterial 9 selbst geeignet sein, um entsprechende funktionale Einheiten 11 herstellen zu können, oder ein entsprechendes Material muss in die Schutzschichtmaterial 9 eingebracht werden. Denkbar wäre beispielsweise die Verwendung der Atomlagenabscheidung, um ein einkristallines Material abzuscheiden. In dem einkristallinen Material könnte dann ein entsprechender IC hergestellt werden. Denkbar und bevorzugter ist auch, dass es sich bei der funktionalen Einheit um einen vorgefertigten Mikro- oder Nanochip handelt, der durch einen Pick-and-Place Operation auf dem Schutzschichtmaterial 9 positioniert wurde.

Die Figur 3b zeigt einen zweiten Prozessschritt einer möglichen Oberflächenmodifizierung der Schutzschichtoberfläche 9o' zur Schutzschichtoberfläche 9o". Durch eine weitere Abscheidung eines Schutzschichtmaterials 9 kann die funktionale Einheit 11 bedeckt werden.

Die Figur 3c zeigt einen dritten Prozessschritt einer möglichen Oberflächenmodifizierung der Schutzschichtoberfläche 9". Durch weitere Prozessschritte können sogenannte Vias 12 hergestellt werden, welche funktionale Einheiten 11 miteinander verbinden können.

Die Figur 3d zeigt den Endzustand einer möglichen Oberflächenmodifizierung der Schutzschichtoberfläche 9'". In der Schutzschichtoberfläche 9‴ wurden mehrere, insbesondere voll funktionsfähige funktionale Einheiten 11 hergestellt. Die Dichte, der Abstand und die Größe der funktionale Einheiten 11 müssen in Größenordnungsbereichen weit unterhalb der transmittierten elektromagnetischen Strahlung liegen, welche die Strukturen 5 der Strukturschicht 7 erreichen sollen. Ansonsten würden die funktionalen Einheiten 11 und/oder die Vias als unerwünschte Streuzentren wirken und die Funktionalität des gesamten Produkts zunichtemachen.

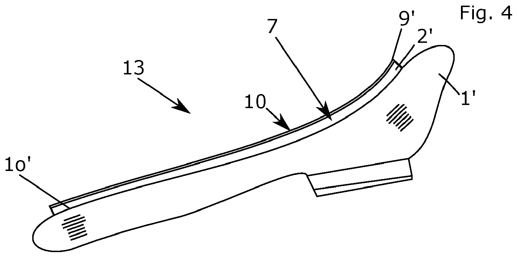

Die Figur 4 zeigt ein exemplarisches, geometrisch kompliziert geformtes, makroskopisches Bauteil 13, bestehend aus einem Substrat 1', auf dessen Substratoberfläche 1o' eine Strukturschicht 7 aufgebracht wurde, die wiederum mit einer erfindungsgemäßen Schutzschicht 10 beschichtet wurde. Die Figur soll zeigen, dass die erfindungsgemäß erzeugten und beschichteten Strukturschichten 7 sehr wohl auf Oberflächen 1o beliebiger Geometrie erzeugt oder zumindest durch einen Transferprozess aufgebracht werden können. Das bei Raumtemperatur eingeleitete Gas, welches zur Aushärtung der Schutzschicht 10 verwendet wird, kann auch komplizierte Bauteil-Geometrien umströmen. Des Weiteren wird ein Bauteil 13, das im Allgemeinen bereits aus mehreren temperatursensiblen Bauteilen bestehen kann, keiner Temperaturbelastung ausgesetzt.

Im Falle der Übertragung einer Strukturschicht 7 auf ein Substrat 1' kann die geringe Schichtdicke der Schutzschicht 10 ebenfalls positiv dazu beitragen, sich an eine beliebige Geometrie anzupassen.

### Bezugszeichenliste

- 1, 1': Substrat
- 1o, 1o': Substratoberfläche
- 2, 2`: Strukturschichtmaterial
- 3: Abscheidesystem
- 4, 4': Stempel
- 5, 5': Struktur
- 6: Einwirkung
- 7: Strukturschicht
- 8, 8': Partikel
- 9, 9`: Schutzschichtmaterial
- 9o, 9o': Schutzschichtoberfläche
- 10, 10': Schutzschicht
- 11: Funktionale Einheit
- 12: Vias
- 13: Bauteil
- t1, t2: Schichtdicke

## Patentansprüche

1. Verfahren zur Aufbringung eines Schutzschichtmaterials (9,9') auf
eine Strukturschicht (7) zur Ausbildung einer transparenten Schutzschicht (10, 10'), vorzugsweise einer Oxidschicht, bevorzugter einer Siliziumdioxidschicht, auf der Strukturschicht (7),
**dadurch gekennzeichnet, dass**
die Aufbringung des Schutzschichtmaterials (9,9') bei einer Temperatur kleiner als 200°C, vorzugsweise kleiner als 100°C, noch bevorzugter kleiner als 75°C, am bevorzugtesten kleiner als 50°C, am allerbevorzugtesten bei Raumtemperatur, erfolgt,
**dadurch gekennzeichnet, dass** die Schutzschicht (7) geprägt wird.

2. Verfahren nach Anspruch 1, wobei die Aufbringung des Schutzschichtmaterials (9,9') mit einem Sol-Gel Verfahren erfolgt.

3. Verfahren nach mindestens einem der vorhergehenden Ansprüche, wobei das Schutzschichtmaterial (9,9') nach der Aufbringung auf die Strukturschicht, vorzugsweise bei Raumtemperatur, mit einem Ammoniakgas zur Ausbildung der Schutzschicht (10,10') ausgehärtet wird.

4. Verfahren nach mindestens einem der vorhergehenden Ansprüche, wobei das, vorzugsweise flüssige, Schutzschichtmaterial (9,9') in die Schutzschicht (10, 10') umgewandelt wird, wobei die Schutzschicht (10, 10') glasartig ist.

5. Verfahren nach mindestens einem der vorhergehenden Ansprüche, wobei die Strukturschicht (7) Strukturen (5,5') aufweist, wobei die Strukturen (5,5') als optische Systeme ausgebildet sind.

## Claims

1. A method for the application of a protective layer material (9, 9') on a structured layer (7) for the formation of a transparent protective layer (10, 10'), preferably an oxide layer, more preferably a silicon dioxide layer, on the structured layer (7), **characterised in that**
the application of the protective layer material (9, 9') takes place at a temperature less than 200 °C, preferably less than 100 °C, still more preferably less than 75 °C, most preferably less than 50 °C, with utmost preference at room temperature,
**characterised in that** the protective layer (7) is embossed.

2. The method according to claim 1, wherein the application of the protective layer material (9, 9') takes place with a sol-gel process.

3. The method according to at least one of the preceding claims, wherein the protective layer material (9, 9') is cured with ammonia gas for the formation of the protective layer (10, 10') after the application of the protective layer, preferably at room temperature.

4. The method according to at least one of the preceding claims, wherein the preferably liquid protective layer material (9, 9') is converted into the protective layer (10, 10'), wherein the protective layer (10, 10') is vitreous.

5. The method according to at least one of the preceding claims, wherein the structured layer (7) comprises structures (5, 5'), wherein the structures (5, 5') are constituted as optical systems.

## Revendications

1. Procédé pour apporter un matériau de couche de protection (9,9') sur une couche structurelle (7) pour former une couche de protection transparente (10, 10'), de préférence une couche d'oxyde, de manière plus préférée une couche de dioxyde de silicium, sur la couche structurelle (7),
**caractérisé en ce que**
l'apport du matériau de couche de protection (9,9') est effectué à une température inférieure à 200 °C, de préférence inférieure à 100 °C, plus encore de préférence inférieure à 75 °C, de manière la plus préférée inférieure à 50 °C, de manière préférée entre toutes à température ambiante,
**caractérisé en ce que** la couche de protection (7) a une empreinte.

2. Procédé selon la revendication 1, dans lequel l'apport du matériau de couche de protection (9,9') est effectué avec un procédé Sol-Gel.

3. Procédé selon au moins l'une des revendications précédentes, dans lequel le matériau de couche de protection (9,9'), après l'apport sur la couche structurelle, de préférence à température ambiante, est durci avec un gaz ammoniaque pour former la couche de protection (10, 10').

4. Procédé selon au moins l'une des revendications précédentes, dans lequel le matériau de couche de protection (9,9'), de préférence liquide, est transformé en la couche de protection (10, 10'), dans lequel la couche de protection (10, 10') est vitreuse.

5. Procédé selon au moins l'une des revendications précédentes, dans lequel la couche structurelle (7) présente des structures (5, 5'), dans lequel les structures (5, 5') sont formées en tant que systèmes optiques.
